# FASCICULE DE BREVET EUROPEEN

(11) **EP 1 619 411 B1**
(45) Date de publication et mention de la délivrance du brevet: **05.09.2007**
(21) Numéro de dépôt: 05356123.9
(22) Date de dépôt: 18.07.2005
(51) Int. Cl.: F16G 11/00, F16G 11/06

(54) **Accessoire pour maintenir ensemble deux brins prolongeant une boucle et dispositif d'attache en comportant application**
Vorrichtung zum Zusammenhalten zweier Litzen einer Schlaufe und Verbindungsvorrichtung zur Anwendung dieser Vorrichtung
Device for holding together two strands of a loop and clamping device using same

(30) Priorité: 19.07.2004 FR 0407977
(43) Date de publication de la demande: 25.01.2006
(73) Titulaire: Gamesystem, 38330 Montbonnot Saint Martin (FR)
(72) Inventeur: Cuny, Bernard, Georges Robert, Saint Nizier 38410 Uriage (FR)
(74) Mandataire: Myon, Gérard Jean-Pierre

(56) Documents cités:
- DE-U- 1 710 204
- GB-A- 702 873
- GB-A- 754 786
- US-A- 1 167 610
- US-A- 1 680 346
- US-A- 1 699 830
- US-A- 1 765 837
- US-A- 1 902 459
- US-A- 2 155 536
- US-A- 2 863 198

## Description

La présente invention est relative à l'attache d'une corde. Plus précisément, elle concerne un accessoire pour maintenir ensemble, localement, les deux brins qui prolongent une boucle d'attache formée par une telle corde. Elle concerne également un dispositif d'attache qui comporte un tel accessoire équipant une corde.

Pour attacher une corde, on peut former avec cette corde une boucle, qui peut être enfilée sur un organe fixe tel qu'un crochet ou être pourvue d'un dispositif d'attache tel qu'un mousqueton.

Pour que cette boucle ne se défasse pas, il est connu de nouer ensemble les deux brins qui la prolongent. Toutefois, un noeud résulte d'une opération manuelle, qui peut toujours être mal effectuée. En outre, même lorsqu'il a été fait correctement, un tel noeud peut se défaire ou se détendre.

Il est également connu d'unir au moyen d'une épissure ou d'une couture les deux brins qui prolongent la boucle d'une corde. Comme sa réalisation requiert des machines spécifiques et un personnel qualifié à même d'employer correctement ces machines, l'épissure ou la couture doit être effectuée en usine, c'est-à-dire avant que la corde soit expédiée sur le site où elle sera utilisée, et ce d'autant plus que la qualité et la fiabilité de cette épissure ou de cette couture dépendent de l'opérateur qui l'a confectionnée.

Il est connu de US-A-2,863,198 de solidariser deux brins de câble prolongeant une boucle au moyen d'un dispositif comprenant une cosse-coeur de réception de la boucle et deux plaques destinées à serrer entre elles les brins de câble, la cosse-coeur étant maintenue en place sur les plaques grâce à une traction exercée sur le câble sans être rigidement associée aux plaques. Dans ce dispositif, les brins de câble sont superposés entre les plaques en un unique emplacement. Un tel agencement n'est pas adapté à l'attache d'une corde car il ne permet pas un serrage optimal des brins et crée un risque de glissement des brins par rapport au dispositif sous l'effet d'une traction, dans le cas de brins de corde. En effet, une corde présente une élasticité nettement plus élevée qu'un câble métallique. Contrairement à un tel câble, elle s'amincit beaucoup lorsqu'elle est sollicitée en traction. Cela induit des problèmes spécifiques qu'on ne rencontre pas lorsqu'on veut former solidement une boucle d'attache avec un câble métallique. C'est pourquoi les dispositifs utilisés pour empêcher une boucle d'attache formée par un tel câble métallique de se défaire, et notamment le dispositif décrit dans US-A-2,863,198, ne conviennent pas aux cordes.

L'invention a pour but de faciliter la confection avec une corde d'une boucle solide et sûre d'attache de cette corde, y compris sur son site d'utilisation.

A cet effet, l'invention a pour objet un accessoire pour maintenir ensemble, localement, deux brins qui prolongent une boucle d'attache formée par une corde, caractérisé en ce qu'il comporte :
- deux parois latérales en regard,
- une cosse-coeur qui entoure un passage la traversant, qui délimite une gorge périphérique pour la boucle et qui est rigidement associée aux parois latérales,
- ainsi qu'une rangée d'au moins deux colonnes reliant les parois latérales l'une à l'autre et définissant entre elles le cheminement des brins, la cosse-coeur étant disposée sensiblement dans le prolongement de la rangée de colonnes, de telle manière que ces brins se croisent , entre la cosse-coeur et la rangée de colonnes, ainsi qu'entre les colonnes.

Selon d'autres caractéristiques avantageuses de cet accessoire:
- il comporte au moins deux pontets qui relient les parois latérales entre elles et sont disposés de manière à délimiter avec ces parois latérales un passage de sortie prévu pour au moins l'un des deux brins de la corde et situé sensiblement à l'opposé de la cosse-coeur ;
- la cosse-coeur est disposée sensiblement dans le prolongement de la rangée de colonnes ;
- au niveau ou au-delà d'une extrémité de la rangée de colonnes et sensiblement à l'opposé de la cosse-coeur, cet accessoire comporte des moyens de blocage du glissement d'un des brins de la corde sur lui ;
- chacune desdites parois latérales en regard comporte au moins une nervure de renforcement longeant la rangée de colonnes ;
- chacune desdites parois latérales en regard comporte au moins une autre nervure de renforcement longeant la rangée de colonnes, l'une et l'autre nervure de renforcement d'une des parois latérales en regard formant chacune un rebord dirigé vers l'autre paroi latérale ;
- il comporte deux pièces assemblées, dont chacune définit l'une des parois latérales et une portion non fermée sur elle-même de la cosse-coeur ;
- les pièces assemblées sont fixées l'une à l'autre notamment entre la cosse-coeur et la rangée de colonnes ;
- lesdites pièces sont identiques ;
- à l'opposé de la rangée de colonnes, chaque portion non-fermée sur elle-même de la cosse-coeur se termine par une extension qui s'étend en direction de l'autre portion non-fermée sur elle-même ;
- il comporte des moyens d'assemblage qui passent au moins dans l'une des colonnes et qui maintiennent assemblées lesdites pièces ;
- la cosse-coeur est configurée pour céder dès qu'un élément passé dans cette cosse-coeur exerce sur cette dernière un effort d'intensité supérieure à une valeur prédéterminée.
- l'une au moins desdites colonnes comporte deux demi-colonnes dont chacune est solidaire d'une des parois latérales, passe dans un trou percé dans l'autre paroi latérale et porte un rebord retenant cette autre paroi latérale ;
- chacune desdites pièces est monobloc avec l'une des deux demi-colonnes ;
- il comporte au moins une pièce d'écartement qui se trouve entre les deux demi-colonnes, chaque demi-colonne étant serrée par la pièce d'écartement sur le bord du trou qu'elle traverse, les rebords des demi-colonnes étant disposés à l'opposé de la pièce d'écartement.

L'invention a également pour objet un dispositif d'attache comprenant une corde formant une boucle que prolonge deux brins de cette corde, caractérisé en ce qu'il comprend un accessoire tel que défini ci-dessus, la boucle de la corde s'enroulant sur la cosse-coeur, les deux brins de la corde se croisant entre la cosse-coeur et la rangée de colonnes, ainsi qu'entre les colonnes.

Avantageusement, les parois latérales serrent l'un sur l'autre les brins là où ces brins se croisent dans le dispositif d'attache.

L'invention sera bien comprise à la lecture de la description qui va suivre, donnée uniquement à titre d'exemple et faite en se référant aux dessins annexés, sur lesquels :
- la figure 1 est une vue en perspective d'un dispositif d'attache conforme à l'invention ;
- la figure 2 est une vue éclatée, en perspective, du dispositif d'attache représenté à la figure 1 ;
- la figure 3 est une vue en perspective d'un accessoire constitutif du dispositif de la figure 1 et conforme à l'invention ;
- la figure 4 est une vue latérale, avec arrachement, de l'accessoire représenté à la figure 3 ;
- la figure 5 représente l'accessoire des figures 3 et 4, vu par une extrémité, selon la flèche V à la figure 4 ;
- la figure 6 est une coupe selon la ligne VI-VI à la figure 4 ;
- la figure 7 est une vue en perspective d'un accessoire selon une variante de réalisation de l'invention ;
- la figure 8 est une vue en perspective d'une pièce constitutive de l'accessoire de la figure 7 ;
- la figure 9 est une coupe selon le plan IX de la figure 7 ; et
- la figure 10 est une vue en perspective d'un dispositif d'attache qui est selon une variante de réalisation de l'invention, qui comporte l'accessoire des figures 7 et 9, et qui a amorti une chute importante.

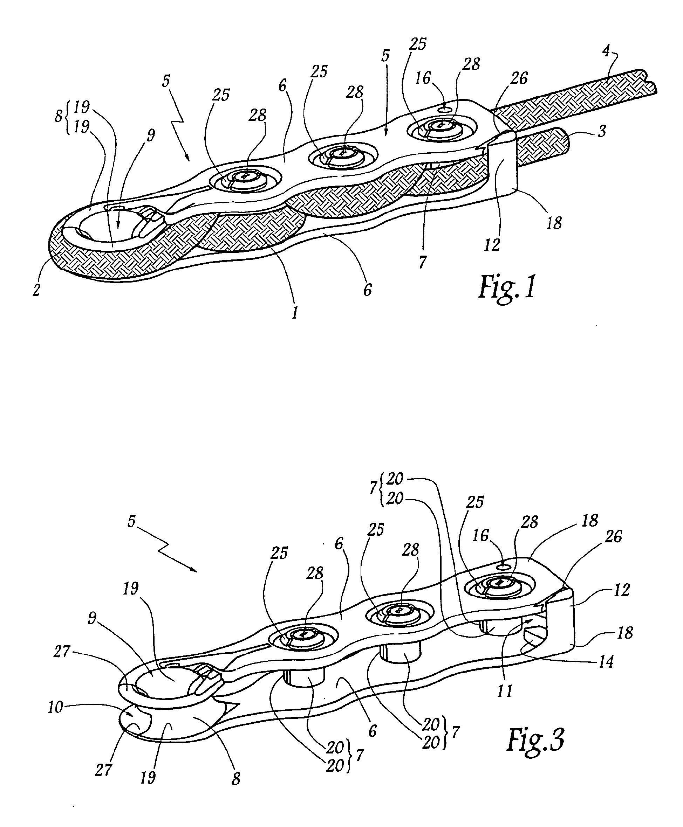

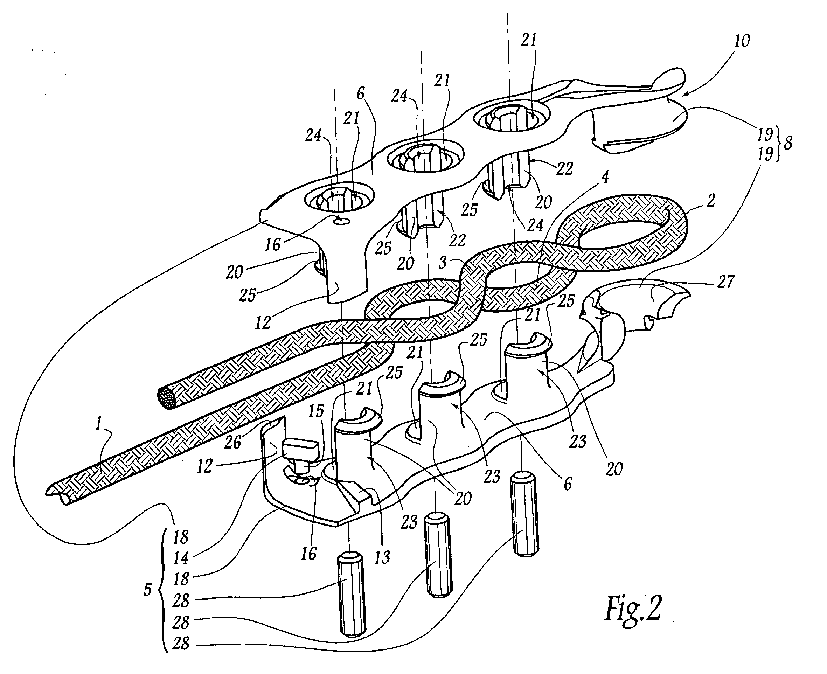

Sur les figures 1 et 2 est représenté un dispositif d'attache qui comporte une corde 1 formant une boucle 2. Deux brins de la corde 1, à savoir un brin mort 3 et un brin actif 4, prolongent la boucle 2 et sont maintenus ensemble, à proximité de cette boucle 2, par un accessoire 5.

Au sens où on l'entend ici, le brin actif est le brin destiné à être sollicité en traction, le brin mort étant destiné à ne pas être sollicité.

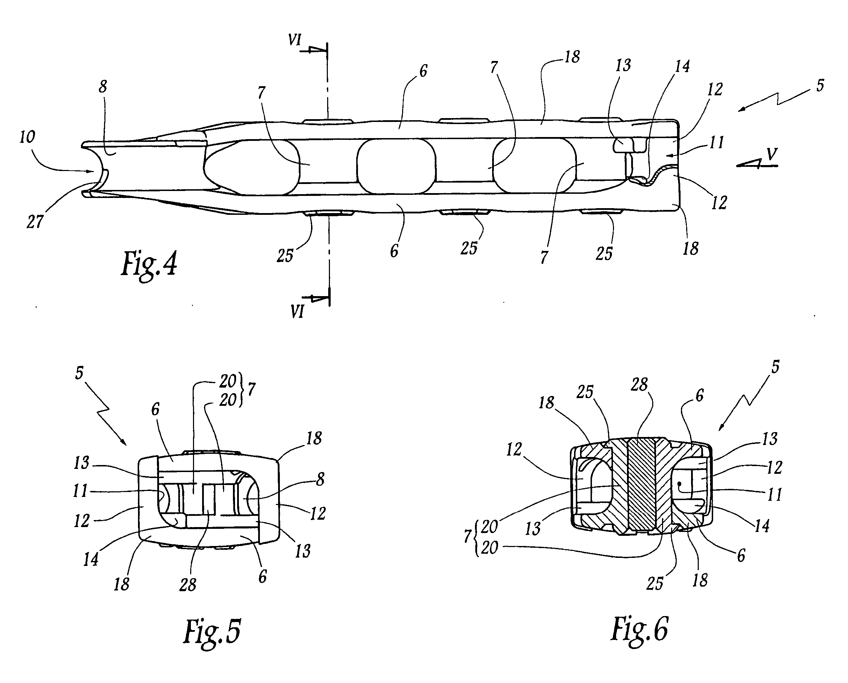

L'accessoire 5, qui est représenté seul aux figures 3 à 6, comporte deux parois latérales en regard 6, qui sont reliées l'une à l'autre par une rangée de colonnes alignées 7, au nombre de trois dans l'exemple représenté, ainsi que par une cosse-coeur 8 placée dans le prolongement de cette rangée.

Au sens où on l'entend ici, une cosse-coeur est un élément globalement annulaire, qui entoure un passage traversant 9 et délimite, au moins sur l'essentiel de sa circonférence, une gorge périphérique 10 de réception d'une corde ou d'un câble. Dans l'accessoire 5, la cosse-coeur 8 est rigidement associée aux parois latérales 6 avec lesquelles elle est monobloc.

Dans le prolongement de la rangée de colonnes 7 et à l'opposé de la cosse-coeur 8, l'accessoire 5 délimite un passage de sortie pour les brins 3 et 4. Ce passage de sortie, référencé 11 aux figures 4 et 6, est fermé latéralement, puisqu'il est délimité par les parois latérales 6, ainsi que par deux pontets latéraux 12 prévus pour venir chacun en appui contre la paroi avec laquelle ils ne sont pas monobloc.

Comme il ressort plus particulièrement de la figure 2, les colonnes 7 définissent le cheminement des brins 3 et 4 entre elles et entre les parois 6.

Entre l'un des pontets 12 et la colonne 7 la plus proche de ce pontet 12, deux protubérances portées par les parois latérales 6 saillent l'une vers l'autre, ce qui est bien visible à la figure 5. Elles sont prévues pour serrer entre elles le brin mort 3 afin de l'empêcher de glisser sur l'accessoire 5. L'une de ces protubérances est formée par une nervure 13 portée par l'une des parois latérales 6. L'autre protubérance est formée par une pièce rapportée 14 équipée d'une queue de montage 15. Cette dernière passe dans un trou 16 (fig. 2) percé dans une paroi 6.

Comme on peut bien le voir à la figure 2, l'accessoire 5 est un assemblage de plusieurs pièces, dont deux sont identiques et référencées 18. Chaque pièce 18 est réalisée en fonte d'aluminium ou en polymère et définit l'une des parois latérales 6, une portion non-fermée sur elle-même 19 de la cosse-coeur 8, trois demi-colonnes 20, l'un des pontets 12 et une nervure 13.

La paroi latérale 6 d'une pièce 18 est percée de trois trous traversants 21, chacun pour le passage d'une demi-colonne 20 de l'autre pièce 18. Chaque trou 21 percé dans une paroi latérale 6 est accolé à l'une des demi-colonnes 20 qui s'étendent à partir de cette paroi 6.

Chaque demi-colonne 20 d'une pièce 18 présente une surface interne 22, destinée à être en regard de celle d'une demi-colonne 20 de l'autre pièce 18, ainsi qu'une surface externe 23, cylindrique pour l'essentiel, sur laquelle l'un des brins 3 et 4 est destiné à appuyer. Chaque surface interne 22 délimite une gorge interne et longitudinale 24.

L'extrémité libre de chaque demi-colonne 20 d'une pièce 18 est pourvue d'un rebord externe 25 de retenue de l'autre pièce 18 par sa paroi latérale 6. L'extrémité libre de chaque demi-colonne 20 est chanfreiné notamment au niveau de son rebord 25, afin que son insertion dans un trou 21 de l'autre pièce 18 soit facilitée.

Le pontet 12 d'une pièce 18 comporte également un rebord 26 de retenue de l'autre pièce 18.

A l'opposé des demi-colonnes 20 d'une pièce 18, la portion 19 de cette pièce 18 se termine par une extension courbe 27.

Pour constituer le dispositif d'attache représenté à la figure 1, on commence par former la boucle 2, éventuellement autour d'un organe d'attache non représenté, en installant cette boucle 2 sur la portion 19 d'une première pièce 18, qui est dissociée de la deuxième pièce 18. Toujours sur la première pièce 18, on installe ensuite les brins 3 et 4 de telle manière que ces derniers se croisent une première fois entre la portion 19 et les demi-colonnes 20 de cette première pièce 18, puis une deuxième et une troisième fois entre ces demi-colonnes. Après cela, on place la portion 19 de la deuxième pièce 18 dans la boucle 2 et on applique les deux portions 19 l'une contre l'autre de manière à former la cosse-coeur 8.

Ensuite, on serre la boucle 2 sur la cosse-coeur 8, puis on rapproche les parois latérales 6 l'une de l'autre en faisant glisser les demi-colonnes 20 de la première pièce 18 sur les demi-colonnes 20 de la deuxième pièce 18, tout en prenant soin de placer les brins 3 et 4 entre les pontets 12. Après que chaque rebord 25 a franchi une paroi latérale 6 en passant dans un trou 21, on insère à force une barrette d'écartement 28 dans le passage que la réunion de deux gorges 24 forme dans chaque colonne 7.

Dans ce qui suit, on se réfère plus particulièrement à la figure 6. Lorsque le dispositif d'attache de la figure 1 est constitué, chaque colonne 7 comporte deux demi-colonnes 20, qui serrent entre elles une barrette d'écartement 28. En réaction, cette barrette d'écartement 28 serre contre le bord d'un trou 21 chacune des deux demi-colonnes 20 qui l'entourent. Les rebords 25 de chaque pièce 18 retiennent l'autre pièce 18 par sa paroi latérale 6. Ils ne peuvent plus se décrocher et franchir les trous 21 du fait de la présence des barrettes d'écartement 28.

Le rebord 26 de chaque pièce 18 complète l'action des rebords 25 et retient l'autre pièce 18 par sa paroi 6.

Les parois latérales 6 serrent l'un sur l'autre les brins 3 et 4, là où ces derniers se croisent.

Les deux extensions 27 s'appliquent l'une contre l'autre et forment un arc de la cosse-coeur 8. Chaque extension 27 entoure partiellement le passage 9, ce qui s'oppose à ce qu'un organe passant dans ce passage 9 s'insère entre les bords terminaux en contact des portions 19 de la cosse-coeur 8 et s'échappe de cette dernière.

Seule une pièce 18 sur les deux est pourvue de la pièce rapportée 14. La boucle 2, partiellement logée dans la gorge 10, est orientée de telle manière que cette pièce 14 serre le brin mort 3 contre une nervure 13, et non le brin actif 4 qui peut donc coulisser dans le passage de sortie 11 et sur les colonnes 7, notamment au moment où une traction lui est appliquée.

Lorsqu'une traction exercée sur la cosse-coeur 8 tend le brin actif 4, l'adhérence de la corde 1 sur les colonnes 7 et la paroi de la gorge périphérique 10 s'opposent également au coulissement du brin mort 3 dans le passage de sortie 11. Plus la traction exercée sur la cosse-coeur 8 est importante, plus la corde 1 est serrée sur les colonnes 7 et sur la paroi de la gorge 10, et plus cette adhérence est forte. A cet égard, on notera que la présence de la cosse-coeur 8 permet d'augmenter la surface de frottement entre la corde 1 et l'accessoire 5, ce qui est avantageux.

Le serrage des brins 3 et 4 l'un sur l'autre au niveau de leurs croisements successifs contribue également à ce que la boucle 2 ne se défait pas lorsqu'une traction impulsionnelle résultant d'un choc ou une traction simple est exercée sur la cosse-coeur 8.

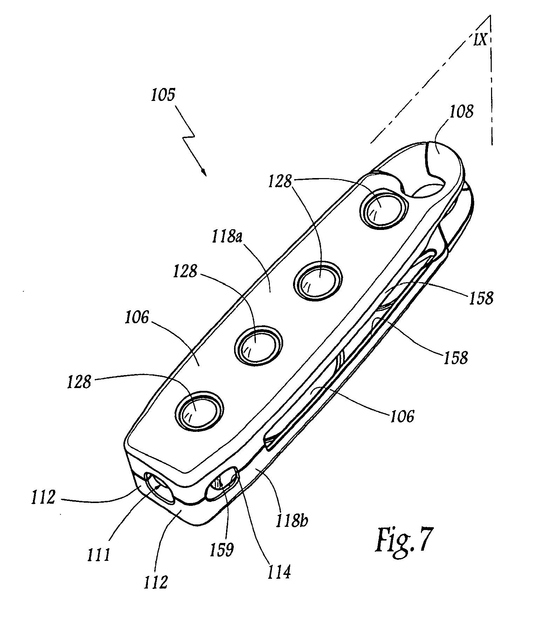

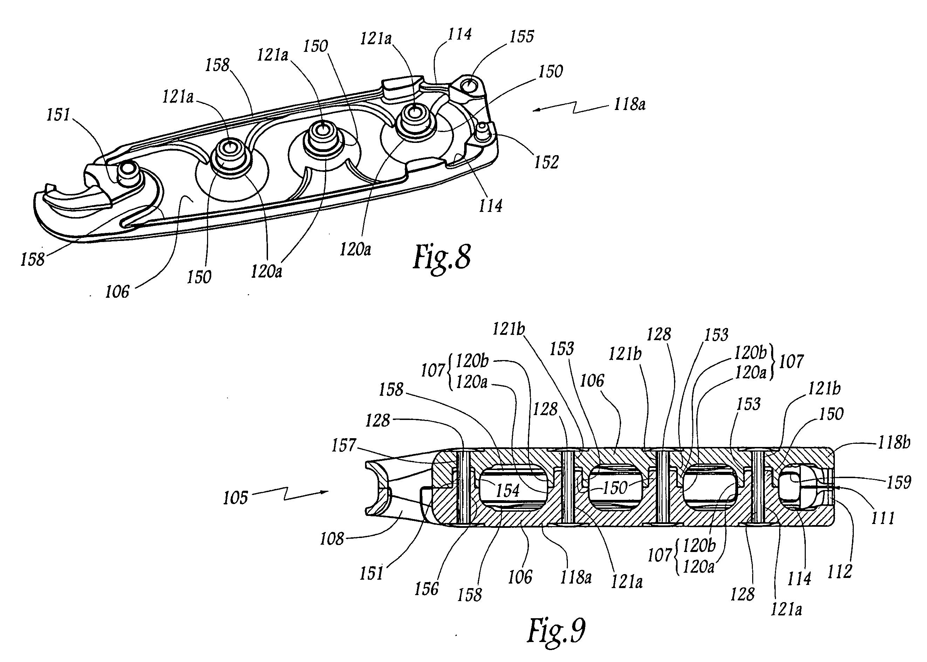

Un accessoire 105 selon une variante de réalisation de l'invention est représenté seul aux figures 7 et 9. Dans ce qui suit, on ne décrit que ce qui le distingue de l'accessoire 5. En outre, une référence utilisée pour désigner ci-après une partie de l'accessoire 105 semblable ou équivalente à une partie référencée de l'accessoire 5 est obtenue en augmentant de 100 la référence repérant cette partie sur l'accessoire 5.

L'accessoire 105 résulte de l'assemblage de deux pièces 118a et 118b à l'aide d'organes d'assemblage, pour le passage desquels sont prévus des trous 121a et 121b, et qui sont non pas des barrettes d'écartement 28, mais des rivets 128, au nombre de quatre dans l'exemple représenté. Ces pièces 118a et 118b, analogues aux pièces 18, sont moulées en aluminium ou en un alliage à base d'aluminium. Dans ce qui suit, on ne décrit que ce qui différencie chacune d'elles d'une pièce 18.

La pièce 118a, qui est représentée seule à la figure 8, et la pièce 118b se distinguent l'une de l'autre en ce que la première comporte plusieurs tenons 150 et 151, tandis que la deuxième comporte plusieurs mortaises 153 et 154, complémentaires de ces tenons 150 et 151.

Pour le reste, les pièces 118a et 118b sont sensiblement identiques. Chacune d'elles comporte un tenon 152 (figure 8) et délimite une mortaise 155 (figure 8), qui est complémentaire de ce tenon 152. Le tenon 152 de l'une des pièces 118a et 118b se trouve au niveau de l'un des pontets 112 de l'accessoire 105. Il en est de même de la mortaise 155 de l'autre pièce 118a ou 118b de cet accessoire 105.

Chaque colonne 107 se scinde non pas axialement mais transversalement en deux demi-colonnes 120a et 120b. Chaque demi-colonne 120a est pourvue d'un tenon 150 qui la prolonge. Chaque demi-colonne 120b délimite l'une des mortaise 153. Chaque demi-colonne 120a et le tenon 150 qui l'équipe sont percés d'un trou 121a, tandis que chaque demi-colonne 120b est percée d'un trou 121b qui débouche dans la mortaise 153 correspondante.

Le tenon 151 et la mortaise 154 sont disposés entre la cosse-coeur 108 et la rangée de colonne 107. Un trou 156 pour le passage d'un rivet 128 et un trou 157 pour le passage de ce même rivet 128 sont respectivement percés dans la pièce 118a, au niveau du tenon 151, et dans la pièce 118b, au niveau de la mortaise 154.

Lorsque les pièces 118a et 118b sont assemblées, chacun des tenons 150 à 152 de la pièce 118a est logé dans l'une des mortaises 153 à 155 de la pièce 118b, tandis que le tenon 152 de la pièce 118b est logé dans la mortaise 155 de la pièce 118a. Chaque trou 121a est dans l'axe d'un trou 121b, ce qui permet qu'un rivet 128, qui maintient assemblées les pièces 118a et 118b, passe dans chaque colonne 107. Un autre rivet 128 est placé dans les trous 156 et 157 se trouvant dans l'axe l'un de l'autre. Cet autre rivet 128 passe dans le tenon 151 et, lui aussi, maintient assemblées les pièces 118a et 118b. En d'autres termes, ces pièces 118a et 118b sont fixées l'une à l'autre à proximité de la cosse-coeur 108, entre cette dernière et la rangée de colonne 107.

Chaque paroi latérale 106 est pourvue de deux nervures longitudinales de renforcement 158, dont chacune longe l'un de ses deux bords latéraux et forme donc un rebord tourné vers l'autre paroi 106 en configuration montée de l'accessoire 105. Chaque nervure de renforcement 158 longe la rangée de colonne 107 et s'étend depuis la cosse-coeur 108 jusqu'à l'extrémité de l'accessoire 105 opposée à cette cosse-coeur 108. L'une des nervures de renforcement 158 se trouve d'un côté de la rangée de colonne 107, de l'autre côté de laquelle se trouve l'autre nervure de renforcement 158.

Les caractéristiques évoquées ci-dessus, qui distinguent l'accessoire 105 de l'accessoire 5, font que cet accessoire 105 est plus résistant que l'accessoire 5 et peut en conséquence être prévu pour des chocs plus élevés.

A proximité du passage de sortie 111, l'accessoire 105 délimite deux passages de sortie 159, qui sont disposés symétriquement de part et d'autre de la rangée de colonne 107, dont chacun débouche latéralement et dont un seulement est destiné à être utilisé pour le passage du brin mort de la corde 1. La portion de chaque nervure de renforcement 158 qui se trouve au niveau de l'un de ces passages 159 est référencée 114 et remplit la même fonction de serrage du brin mort de la corde 1 que la pièce rapportée 14.

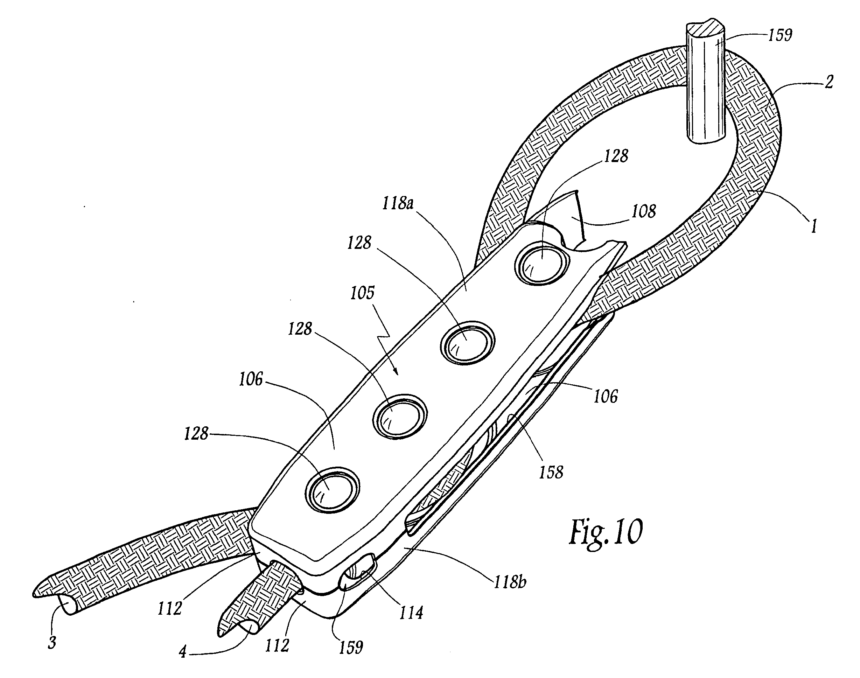

Seul le brin actif 4 de la corde 1 est destiné à sortir d'entre les parois latérales 106 par le passage 111, qui peut donc être plus étroit que le passage de sortie 11. Comme l'accessoire 5, l'accessoire 105 sert à accoupler une corde 1 à un organe d'attache tel que la tige représentée et référencée 159 à la figure 10. Le montage de l'accessoire 105 sur la corde 1 de manière que cette dernière soit accouplée à la tige 159 se déduit aisément de la description faite précédemment de l'assemblage des éléments constitutifs du dispositif d'attache représenté à la figure 1.

Lorsqu'un choc est transmis par le brin actif 4 à l'accessoire 105, la tige 159 soumet la cosse-coeur 108 à un effort. La cosse-coeur 108 est configurée pour ne pas se détériorer si cet effort est inférieur à un seuil prédéterminé et pour céder si cet effort dépasse ce seuil. La valeur de ce seuil résulte d'un choix de conception. Elle peut, par exemple, être choisie égale à la valeur de la force maximale pouvant être supportée sous forme d'un choc, sans blessure grave, par un corps humain normalement constitué et qui est avantageusement comprise entre 550 DAN et 650° DAN. Si un effort d'intensité supérieure au seuil prédéterminé est transmis sous forme d'un choc par le brin actif 4 à la cosse-coeur 108, celle-ci cède, si bien que la boucle 2 est soumise à un effort de traction et que le brin mort 3 coulisse sur une course limitée avec d'importants frottements dans l'accessoire 105. Ces frottements amortissent le choc, ce qui est avantageux, notamment lorsqu'il est la conséquence d'un arrêt brutal par la corde 1 d'une personne attachée à cette corde 1. La figure 10 illustre l'état de l'accessoire 105 et de la corde 1 après un tel choc.

Le fait que la cosse-coeur peut se rompre constitue un témoin de sollicitation maximale obtenue, aisément repérable par l'utilisateur. La valeur de seuil susmentionnée peut être adaptée en fonction de la sollicitation maximale désirée.

Il ressort de ce qui précède que, conformément au but de l'invention, la boucle 2 est robuste et fiable dans le temps, alors que l'installation de la corde 1 dans l'accessoire 5 ou dans l'accessoire 105 ne présente aucune difficulté particulière et ne requiert aucune machine spéciale. Aussi, elle peut être effectuée de manière sûre par une personne non qualifiée, notamment sur le site où le dispositif d'attache représenté à la figure 1 va être utilisé.

Parmi les avantages des accessoires 5 et 105, on notera que la boucle 2 peut être formée non seulement avant, mais également en même temps qu'elle est passée autour d'un organe d'attache.

En outre, une traction exercée sur la cosse-coeur 8 ou sur la cosse-coeur 108 est transmise à un tronçon étendu de la corde 1.

De plus, lors d'une telle traction, la corde 1 n'est pas sollicitée que superficiellement au niveau de l'accessoire 5 ou 105, grâce à ses circonvolutions autour des colonnes 7 ou 107 et de la cosse-coeur 8 ou 108. Au contraire, même son coeur participe au transfert des contraintes le long de la corde 1, hors de l'accessoire 5 ou 105.

Les accessoires 5 et 105 présentent l'avantage de n'affaiblir que très faiblement la corde 1. En d'autres termes, l'installation d'un accessoire 5 ou 105 sur la corde 1 ne modifie guère la résistance de celle-ci à la rupture.

L'invention ne se limite pas aux modes de réalisation décrits précédemment. En particulier, chacun des accessoires 5 et 105 peut avantageusement être muni d'éléments d'habillage rapportés par exemple sur les parois latérales 6 ou 106 de manière à masquer les extrémités des demi-colonnes 20 ou des rivets d'assemblage 128.

## Revendications

1. Accessoire pour maintenir ensemble, localement, deux brins (3, 4) qui prolongent une boucle d'attache (2) formée par une corde (1), **caractérisé en ce qu'**il comporte :
- deux parois latérales (6 ; 106) en regard,
- une cosse-coeur (8 ; 108) qui entoure un passage (9) la traversant, qui délimite une gorge périphérique (10) pour la boucle (2) et qui est rigidement associée aux parois latérales (6 ; 106),
- ainsi qu'une rangée d'au moins deux colonnes (7 ; 107) reliant les parois latérales (6 ; 106) l'une à l'autre et définissant entre elles le cheminement des brins (3, 4), la cosse-coeur étant disposée sensiblement dans le prolongement de la rangée de colonnes, de telle manière que les brins (3, 4) se croisent , entre la cosse-coeur (8 ; 108) et la rangée de colonnes, ainsi qu'entre les colonnes (7 ; 107).

2. Accessoire selon la revendication 1, **caractérisé en ce qu'**il comporte deux pièces assemblées (18 ; 118a, 118b), dont chacune définit l'une des parois latérales (6 ; 106) et une portion non fermée sur elle-même (19) de la cosse-coeur (8 ; 108).

3. Accessoire selon la revendication 2, **caractérisé en ce que** lesdites pièces assemblées (118a, 118b) sont fixées l'une à l'autre notamment entre la cosse-coeur (108) et la rangée de colonnes (107).

4. Accessoire selon l'une quelconque des revendications 2 et 3, **caractérisé en ce que** lesdites pièces (18) sont identiques.

5. Accessoire selon l'une quelconque des revendications 2 à 4, **caractérisé en ce que**, à l'opposé de la rangée de colonnes (7 ; 107), chaque portion non-fermée sur elle-même (19) de la cosse-coeur (8 ; 108) se termine par une extension (27) qui s'étend en direction de l'autre portion non-fermée sur elle-même (19).

6. Accessoire selon l'une quelconque des revendications 2 à 5, **caractérisé en ce qu'**il comporte des moyens d'assemblage (28 ; 128) qui passent au moins dans l'une des colonnes (7 ; 107) et qui maintiennent assemblées lesdites pièces (18 ; 118a ; 118b).

7. Accessoire selon l'une quelconque des revendications précédentes, **caractérisé en ce qu'**il comporte au moins deux pontets (12 ; 112) qui relient les parois latérales (6 ; 106) entre elles et sont disposés de manière à délimiter avec ces parois latérales (6) un passage de sortie (11 ; 111, 159) prévu pour au moins l'un des deux brins (3, 4) de la corde (1) et situé sensiblement à l'opposé de la cosse-coeur (8 ; 108).

8. Accessoire selon l'une quelconque des revendications précédentes, **caractérisé en ce qu'**au niveau ou au-delà d'une extrémité de la rangée de colonnes (7 ; 107) et sensiblement à l'opposé de la cosse-coeur (8 ; 108), cet accessoire comporte des moyens (13, 14 ; 114) de blocage du glissement d'un des brins (3, 4) de la corde sur lui.

9. Accessoire selon l'une quelconque des revendications précédentes, **caractérisé en ce que** chacune desdites parois latérales en regard (106) comporte au moins une nervure de renforcement (158) longeant la rangée de colonnes (107).

10. Accessoire selon la revendication 9, **caractérisé en ce que** chacune desdites parois latérales en regard (106) comporte au moins une autre nervure de renforcement (158) longeant la rangée de colonnes (107), l'une et l'autre nervure de renforcement (158) d'une des parois latérales en regard (106) formant chacune un rebord dirigé vers l'autre paroi latérale (106).

11. Accessoire selon l'une quelconque des revendications précédentes, **caractérisé en ce que** la cosse-coeur (8 ; 108) est configurée pour céder dès qu'un élément (159) passé dans cette cosse-coeur (8 ; 108) exerce sur cette dernière un effort d'intensité supérieure à une valeur prédéterminée.

12. Dispositif d'attache comprenant une corde (1) formant une boucle (2) que prolongent deux brins (3, 4) de cette corde (1), **caractérisé en ce qu'**il comprend un accessoire (5 ; 105) selon l'une quelconque des revendications précédentes, la boucle (2) de la corde (1) s'enroulant sur la cosse-coeur (8 ; 108), les deux brins (3, 4) de la corde (1) se croisant entre la cosse-coeur (8 ; 108) et la rangée de colonnes (7 ; 107), ainsi qu'entre les colonnes (7 ; 107).

13. Dispositif selon la revendication 12, **caractérisé en ce que** lesdites parois latérales (6 ; 106) serrent l'un sur l'autre les brins (3, 4) là où ces brins se croisent.

## Claims

1. Accessory for keeping together locally two ends (3, 4) which extend an attachment loop (2) formed by a rope (1), **characterised in that** it comprises:
- two opposite lateral walls (6; 106);
- a cable thimble (8; 108) which surrounds a passage (9) which passes through it, and delimits a peripheral groove (10) for the loop (2) and is rigidly associated with the lateral walls (6; 106);
- as well as a row of at least two columns (7; 107) which connect the lateral walls (6; 106) to one another and define between one another the path for the ends (3, 4), the cable thimble being disposed substantially in the extension of the row of columns, such that the ends (3, 4) cross over one another between the cable thimble (8; 108) and the row of columns, as well as between the columns (7; 107).

2. Accessory according to claim 1, **characterised in that** it comprises two assembled parts (18; 118a, 118b), each of which defines one of the lateral walls (6; 106) and a portion which is not closed on itself (19) of the cable thimble (8; 108).

3. Accessory according to claim 2, **characterised in that** the said assembled parts (118a, 118b) are secured to one another in particular between the cable thimble (108) and the row of columns (107).

4. Accessory according to either of claims 2 and 3, **characterised in that** the said parts (18) are identical.

5. Accessory according to any one of claims 2 to 4, **characterised in that**, opposite the row of columns (7; 107), each portion which is not closed on itself (19) of the cable thimble (8; 108) ends in an extension (27) which extends in the direction of the other portion which is not closed on itself (19).

6. Accessory according to any one of claims 2 to 5, **characterised in that** it comprises assembly means (28; 128) which pass into at least one of the columns (7; 107) and which keep the said parts (18; 118a; 118b) assembled.

7. Accessory according to any one of the preceding claims, **characterised in that** it comprises at least two bridges (121 112) which connect the lateral walls (6; 106) to one another and are disposed such as to delimit with these lateral walls (6) an outlet passage (11; 111, 159) which is designed for at least one of the two ends (3, 4) of the rope (1) and is situated substantially opposite the cable thimble (8; 108).

8. Accessory according to any one of the preceding claims, **characterised in that** at the level of, or beyond, one end of the row of columns (7; 107) and substantially opposite the cable thimble (8; 108), this accessory comprises means (13, 14; 114) for stopping the sliding of one of the ends (3, 4) of the rope on it.

9. Accessory according to any one of the preceding claims, **characterised in that** each of the said opposite lateral walls (106) comprises at least one reinforcement rib (158) which extends along the row of columns (107).

10. Accessory according to claim 9, **characterised in that** each of the said opposite lateral walls (106) comprises at least one other reinforcement rib (158) which extends along the row of columns (107), each reinforcement rib (158) of one of the opposite lateral walls (106) forming a shoulder which faces towards the other lateral wall (106).

11. Accessory according to any one of the preceding claims, **characterised in that** cable thimble (8; 108) is designed to yield whenever an element (159) which has been passed into this cable thimble (8; 108) exerts on the latter a force with an intensity which is greater than that of a predetermined value.

12. Attachment device comprising a rope (1) forming a loop (2) which is extended by two ends (3, 4) of this rope (1), **characterised in that** it comprises an accessory (5; 105) according to any one of the preceding claims, the loop (2) of the rope (1) being wound around the cable thimble (8; 108), the two ends (3, 4) of the rope crossing over one another between the cable thimble (8; 108) and the row of columns (7; 107), as well as between the columns (7; 107) .

13. Device according to claim 12, **characterised in that** the said lateral walls (6; 106) clamp the ends (3, 4) one on the other at the points where these ends cross over one another.

## Patentansprüche

1. Vorrichtung zum Zusammenhalten von zwei Seilstücken in örtlicher Weise, die eine aus einem Seil (1) gebildete Befestigungsschlaufe (2) verlängern, **dadurch gekennzeichnet, dass** sie umfasst
- zwei sich gegenüberliegende Seitenwände (6; 106),
- eine Herzkausche (8; 108), die einen sie durchgreifenden Durchgang (9) umgibt, eine Umfangsnut (10) für die Schlaufe (2) begrenzt und in starrer Weise den Seitenwänden (6; 106) zugeordnet ist,
- sowie eine Reihe von mindestens zwei Säulen (7; 107), die die Seitenwände (6; 106) miteinander verbinden und die zwischen sich die Führung der Seilstücke (3, 4) definieren, wobei die Herzkausche im Wesentlichen in der Verlängerung der Reihe der Säulen derart angeordnet ist, dass die Seilstücke (3, 4) sich zwischen der Herzkausche (8; 108) und der Reihe der Säulen sowie zwischen den Säulen (7; 107) kreuzen.

2. Vorrichtung nach Anspruch 1, **dadurch gekennzeichnet, dass** sie zwei zusammengesetzte Teile (18; 118a, 118b) umfasst, von denen jedes eine der Seitenwand (6; 106) und einen nicht an sich selbst geschlossenen Bereich (19) der Herzkausche (8; 108) bestimmt.

3. Vorrichtung nach Anspruch 2, **dadurch gekennzeichnet, dass** die zusammengesetzten Teile (118a, 118b) aneinander befestigt sind, insbesondere zwischen der Herzkausche (108) und der Säulenreihe (107).

4. Vorrichtung nach einem beliebigen der Ansprüche 2 und 3, **dadurch gekennzeichnet, dass** die Teile (18) identisch sind.

5. Vorrichtung nach einem beliebigen der Ansprüche 2 bis 4, **dadurch gekennzeichnet, dass** entgegengesetzt zu der Reihe von Säulen (7; 107) jeder nicht an sich selbst geschlossene Bereich (19) der Herzkausche (8; 108) durch eine Erweiterung (27) endet, die sich in Richtung des anderen nicht an sich selbst geschlossenen Bereichs (19) erstreckt.

6. Vorrichtung nach einem beliebigen der Ansprüche 2 bis 5, **dadurch gekennzeichnet, dass** sie Mittel zum Zusammensetzen (28; 128) umfasst, die in mindestens einer der Säulen (7, 107) hindurchgehen und die die Teile (18; 118a, 118b) zusammengefügt halten.

7. Vorrichtung nach einem beliebigen der vorhergehenden Ansprüche, **dadurch gekennzeichnet, dass** sie mindestens zwei Bügel (12, 112) umfasst, die die Seitenwände (6, 106) untereinander verbinden und so angeordnet sind, dass sie mit diesen Seitenwänden (6) einen Austrittsdurchgang (11; 111, 159) begrenzen, der für mindestens eines der zwei Seilstücke (3, 4) des Seils (1) vorgesehen ist und im Wesentlichen entgegengesetzt zur Herzkausche (8; 108) angeordnet ist.

8. Vorrichtung nach einem beliebigen der vorhergehenden Ansprüche, **dadurch gekennzeichnet, dass** an oder über ein Ende der Reihe der Säulen (7; 107) hinaus und im Wesentlichen entgegengesetzt zur Herzkausche (8; 108) diese Vorrichtung Mittel (13, 14; 114) zum Blockieren des Gleitens eines der Seilstücke (3, 4) des Seils auf ihr umfasst.

9. Vorrichtung nach einem beliebigen der vorhergehenden Ansprüche, **dadurch gekennzeichnet, dass** jede der gegenüberliegenden Seitenwände (106) mindestens eine Verstärkungsrippe (158) umfasst, die sich entlang der Reihe der Säulen (107) erstreckt.

10. Vorrichtung nach Anspruch 9, **dadurch gekennzeichnet, dass** jede der gegenüberliegenden Seitenwände (106) mindestens eine andere Verstärkungsrippe (158) umfasst, die sich entlang der Reihe der Säulen (107) erstreckt, wobei die eine und die andere Verstärkungsrippe (158) einer der gegenüberliegenden Seitenwände (106) jede einen Rand bildet, der zur anderen Seitenwand (106) gerichtet ist.

11. Vorrichtung nach einem der vorhergehenden Ansprüche, **dadurch gekennzeichnet, dass** die Herzkausche (8; 108) ausgebildet ist, nachzugeben, sobald ein in dieser Herzkausche (8; 108) passierendes Element (159) eine Kraft auf letztere ausübt, deren Stärke größer ist als ein vorbestimmter Wert.

12. Befestigungsvorrichtung mit einem Seil (1), das eine Schlaufe (2) bildet, die zwei Seilstücke (3, 4) dieses Seils (1) verlängern, **dadurch gekennzeichnet, dass** sie eine Vorrichtung (5; 105) nach einem der vorhergehenden Ansprüche umfasst, wobei die Schlaufe (2) des Seils (1) sich um die Herzkausche (8; 108) windet und die zwei Seilstücke (3, 4) des Seils (1) sich zwischen der Herzkausche (8; 108) und der Reihe von Säulen (7; 107) sowie zwischen den Säulen (7; 107) kreuzen.

13. Vorrichtung nach Anspruch 12, **dadurch gekennzeichnet, dass** die Seitenwände (6; 106) die Seilstücke (3, 4) dort, wo die Seilstücke sich kreuzen, zwischen sich einklemmen.
